Europäisches Patentamt

European Patent Office

Office européen des brevets

(11) Publication number: **0 146 081**
A2

(12) # EUROPEAN PATENT APPLICATION

(21) Application number: **84114825.7**

(22) Date of filing: **06.12.84**

(51) Int. Cl.⁴: **B 01 J 3/04**, B 01 J 19/02

(30) Priority: **14.12.83 IT 2417383**

(43) Date of publication of application: **26.06.85**
**Bulletin 85/26**

(84) Designated Contracting States: **BE CH DE FR GB IT LI
NL SE**

(71) Applicant: **BELLELI S.p.A., Strada Cipata 81,
I-46100 Mantova (IT)**

(72) Inventor: **Belleli, Riccardo, Via Einaudi, 6,
I-46100 Montova (IT)**

(74) Representative: **Modiano, Guido et al, MODIANO, JOSIF,
PISANTY & STAUB Modiano & Associati Via
Meravigli, 16, I-20123 Milan (IT)**

(54) **Method of making a pressure vessel with an anti-corrosion coating, and vessel obtained thereby.**

(57) The affected technical field is that of pressure vessels, and the invention relates to a method of making a pressure vessel with an anti-corrosion coating, and a vessel obtained thereby, which are made such as to avoid the danger of disbonding. The solution consists of a method comprising a first step of deposition by welding on the layer of base material of the shroud (1) a layer (2) of low carbon steel, and a second step of deposition by welding on the low carbon steel layer, a layer (3) of anti-corrosion material.

EP 0 146 081 A2

## METHOD OF MAKING A PRESSURE VESSEL WITH AN ANTI-CORROSION COATING, AND VESSEL OBTAINED THEREBY

This invention relates to a method of making a pressure vessel with an anti-corrosion coating, and a vessel obtained thereby.

Known is to use pressure vessels in catalytic hydrogenation processes to obtain hydrocarbons, the wall whereof, called shroud, comprises a layer made of a base material, usually constituted by a low-alloy steel, which serves the function of withstanding the mechanical stresses, over the inner surface whereof a layer is present, which is deposited by welding, of an anti-corrosion material, such as may commonly be a stainless steel.

Into these vessels there is inserted under a very high pressure, on the order of hundreds of atmospheres, and at a temperature which is also very high, around 800-1,000°C, hydrogen for performing the process, which partly penetrates, however, inside the layer of anti-corrosion material, and inserts itself in the crystalline lattice of the underlying base material, with the result that during the apparatus cooling phases there may occur separation of said surface layer of anti-corrosion material from the underlying base material.

The phenomenon is known as disbonding.

The problem, which clearly affects all the instances of pressurized vessels intended for performing processes involving the presence of free hydrogen, appears to be quite evidently very serious, and previous attempts to resolve the situation, based on the selection of the welding method and selection of the most suitable parameters, have failed to provide a satisfactory solution.

It is the aim of this invention to provide a method for depositing anti-corrosion material in pressure vessels, which ensures faultless adhesion of the layer of said material to the underlying material, so as to eliminate the possibility of the various layers separating.

Within the proposed aim, it is an object of the invention to provide a method which can be implemented without any particular limitations on the selection of the method and parameters of the welding operation for the deposition of the layers.

Still another object of the invention is to provide a pressure vessel provided with a layer of an anti-corrosion material on the inside surface of the shroud, which is not liable to separation of the various layers of said shroud during the thermal alternations which occur in the course of the process which takes place therein.

The proposed aim and the objects of the invention are achieved according to one aspect of the invention by a method of making a pressure vessel with an anti-corrosion coating, and vessel obtained thereby, having a shroud comprising a layer formed from a base material capable of withstanding mechanical stresses, characterized in that it comprises a first step of depositing by welding on the inner surface of the base material layer a low carbon steel layer, and a second step of depositing by welding on the low carbon steel layer formed by the first step, a layer of anti-corrosion material. Preferably the low carbon steel is a dead soft steel.

According to another aspect of the invention, the foregoing objects are achieved by a method of making at least one wall portion of a pressure vessel, wherein the wall portion has a layer formed from a base material and having an inner and an outer surface and capable of withstanding mechanical stresses and an anti-corrosion coating, characterized in that the method comprises a first step of depositing by welding over the inner surface of the base material layer a layer of low carbon steel, and a second step of depositing by welding over the low carbon steel layer, formed in the first step, a layer of an anti-corrosion material.

A pressure vessel obtained with the method of this invention, provided with a shroud comprising a layer formed from a base material capable of withstanding mechanical stresses, and an inner surface layer formed from an anti-corrosion material, is characterized in that it comprises between said layer formed from a base material and said layer formed from an anti-corrosion material, an intermediate layer of low carbon steel.

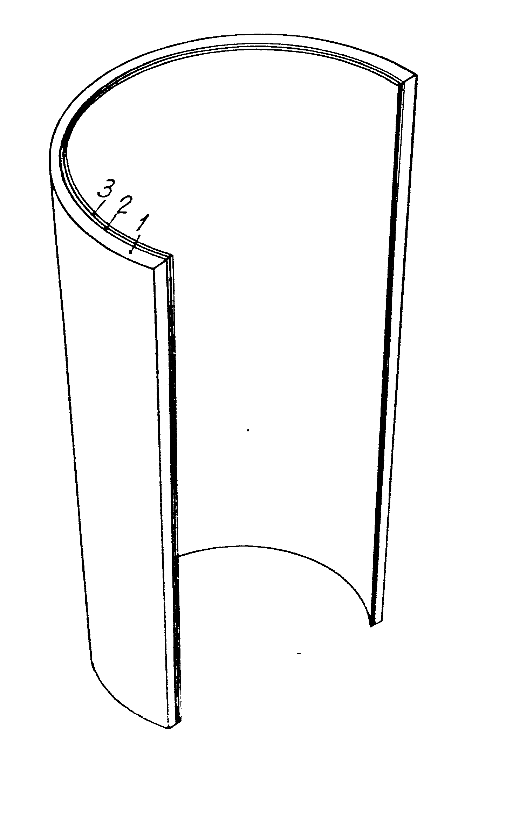

Further features and advantages will be more apparent from the description of a method of making a pressure vessel with an anti-corrosion coating and of a vessel obtained thereby, as illustrated by way of example and not of limitation in the accompanying drawing the one figure whereof shows a portion of a vessel shroud.

The method according to the invention consists of depositing by welding over the inner surface of the layer 1 formed from a base material, most commonly a low-alloy steel which is relied upon for withstanding the mechanical stresses, a layer 2 of low carbon steel, and subsequently depositing on said layer 2, again by welding, a layer 3 of an anti-corrosion material, such as may most commonly be stainless steel.

The layer 2, which in a particularly advantageous way may be formed from the mild steel of very low carbon content known under the trade name of "Armco Iron", may preferably have a thickness in the range of one to five millimeters.

The resulting vessel has shown to be free from the danger of disbonding in the usual conditions of operation, and it is important to observe that the effectiveness of the method is not even slightly affected by the welding methods and parameters for the deposition of the two successive layers, with consequent ample faculty of choice of said methods and parameters as dictated by other requirements, such as those connected with the workshop facilities, economical convenience, and so on.

Scientific studies have been made for explaining the disbonding phenomenon.

It has been observed that other gases such as nitrogen, do not cause the disbonding phenomenon. It is believed that this is due to the fact that the molecules of hydrogen are very small and therefore infiltrate between the conventional coating layers causing the disbonding phenomenon.

The preferable range of the carbon content in the intermediate layer of low carbon steel is between 0.005 and 0.15 weight per cent.

## EXAMPLE I

On a plate of base material consisting of low-alloy steel, 12 Cr.Mo.9.10 of the type as identified in the sheet No. 404 of West-German Association VD TÜV (Vornorm des Technischen Überwachnungsvereins-Köln) and having the following chemical composition:

C 0.12 = Si 0.01 = Mn 0.51 = P 0.008 = S 0.008 = Cr 2.42 = Mo 0.94 = Ni 0.24 = Cu 0.05 = Al 0.003 and with a thickness of 100 mm, a layer of about 2 mm of dead soft steel produced by the American Company Armco Steel Corporation and known under the trade name "Armco Iron" and having the following composition: C = 0.01; Mn = 0.017; P = 0.005; S = 0.025 was welded thereon. The welding between the two layers was carried out according to the SAW method (Submerged Arc Welding) with D.C. of 600 A and 30 V, reversed polarity, travel speed of 14 standard speed units, a preheating temperature of 100°C, interpass temperature of 180°C. The welded layers were subjected to a soaking treatment during 2 hours at 300°C temperature.

After cooling at room temperature a layer of anti-corrosion material having a thickness of 2-2.5 mm produced by the American Company Sandvik Steel Inc. and having the tradename "309 NB L" and the Commercial Code SANDVIK 3 Re 41 and with the following composition:

C = 0.04; Cr = 22 + 25; Ni = 12 + 14; Mo = 0.5; Nb + Ta = 0.7 + 1

was coated by welding on the layer of dead soft steel. The welding was carried out again according to the above indicated SAW method. The so coated plate was subjected to a heat treatment at 680-700°C.

From the plate thus obtained test pieces were cutout for the disbonding test, which were put in an autoclave at a temperature of 450°C and with a partial hydrogen pressure of 200 bar for a duration of more than 72 hours and then cooled in water. No disbonding phenomenon was observed. The disbonding observations were made by means of acoustic, micrographic and ultrasonic tests.

## EXAMPLE II

Example I was repeated with the following differences:

Instead of the base material plate of Example I, the following low-alloy steel was used: SA 336 F22 as defined by the American Standards ASME, Section 2, Part A

C = 0.14 = Si 0.22 = Mn 0.45 = P 0.009 = S 0.007 = Cr 2.35 = Mo 1.02 = Ni 0.06 = Cu 0.07 = Al 0.021.

The above low-alloy steel was produced by the Italian Company Acciaierie Terni.

Instead of the layer of dead soft steel of Example I, a layer of low carbon steel was used having a thickness of 2 mm and the following composition:

C = 0.04; Mn = 0.51; Si = 0.040; S = 0.018; P = 0.012.

The steel was produced by the Company ARCOS ITALIA of CINISELLO BALSAMO, MILAN, ITALY, and is identified with the name: Steel T10.

A test piece of the coated plate as obtained with the intermediate layer of dead soft steel was subjected to the tests as described in Example I. No disbonding phenomenon was observed.

The invention described is susceptible to many modifications and changes, all of which fall within the purview of the inventive concept; furthermore, the materials used, and the shapes and dimensions, may be any ones depending on requirements.

## CLAIMS

1. A method of making at least one wall portion of a pressure vessel, wherein the wall portion has a layer formed from a base material and having an inner and an outer surface and capable of withstanding mechanical stresses and an anti-corrosion coating, characterized in that the method comprises a first step of depositing by welding over the inner surface of the base material layer, a layer of low carbon steel, and a second step of depositing by welding over the low carbon steel layer, formed in the first step, a layer of an anti-corrosion material.

2. A method according to claim 1, wherein said layer of low carbon steel comprises dead soft steel having a very low carbon content.

3. A method according to claims 1 and 2, wherein said layer of low carbon steel has a thickness substantially in the range of one to five millimeters.

4. A method according to claims 1-3, wherein said base material layer is made of low-alloy steel.

5. A method according to claims 1-4, wherein said layer of low carbon steel has a carbon content preferably in the range between 0.005 and 0.15 weight per cent.

6. A method according to claims 1-5, wherein said anti-corrosion material is an alloy of iron containing one or more metals selected from the group including Cr, Ni, Mo, Nb or Ta.

7. A pressure vessel having at least one wall portion obtained by the method as claimed in claims 1-6.

0146081

8. A pressure vessel including a shroud comprising a layer (1) formed from a base material capable of withstanding mechanical stresses, and an inner surface layer (3) formed from an anti-corrosion material, characterized in that it comprises between said layer formed from a base material, and said layer of anti-corrosion material, an intermediate layer (2) of low carbon steel.